Europäisches Patentamt

**European Patent Office**

Office européen des brevets

(19)

(11) Numéro de publication: **0 053 553 B1**

(12) **FASCICULE DE BREVET EUROPEEN**

(45) Date de publication du fascicule du brevet: **27.03.85**

(51) Int. Cl.⁴: **G 21 C 13/00**

(21) Numéro de dépôt: **81401878.4**

(22) Date de dépôt: **26.11.81**

(54) **Bâtiment réacteur comportant des structures internes dont les sollicitations sont indépendantes des déformations du radier général, et procédé pour la réalisation de ces structures internes.**

(30) Priorité: **28.11.80  FR 8025305**

(43) Date de publication de la demande:
**09.06.82 Bulletin 82/23**

(45) Mention de la délivrance du brevet:
**27.03.85 Bulletin 85/13**

(84) Etats contractants désignés:
**BE CH DE FR GB IT LI**

(56) Documents cités:
**DE - A - 1 965 850**
**DE - A - 2 346 727**
**FR - A - 2 214 158**
**FR - A - 2 226 729**
**GB - A - 1 086 054**

(73) Titulaire: **Framatome, Tour Fiat 1 place de la Coupole, F-92400 Courbevoie (FR)**

(72) Inventeur: **Hista, Jean-Claude, Comm à l'energie atomique 17, Avenue de la Maye, F-78000 Versailles (FR)**

(74) Mandataire: **Mongrédien, André et al, c/o BREVATOME 25, rue de Ponthieu, F-75008 Paris (FR)**

BUNDESDRUCKEREI BERLIN

# Description

La présente invention a pour objet un bâtiment réacteur comportant des structures internes dont les sollicitations sont indépendantes des déformations du radier général.

Elle a également pour objet un procédé de réalisation de ces structures internes.

On sait que d'une manière générale, le bâtiment das lequel est installé un réacteur nucléaire, appelé encore bâtiment réacteur, est constitué par une enceinte de confinement à l'intérieur, de laquelle sont disposées des structures, dites structures internes, qui supportent les composants du circuit primaire. Ces structures comprennent un radier, dit radier des structures internes, une structure appelée puits de cuve entourant et supportant la cuve du réacteur, et des casemates situées autour du puits de cuve. L'enceinte de confinement dont l'étanchéité est assurée par un revêtement métallique en acier doux, appelé, encore peau, a pour but d'éviter toute fuite de substance radioactive en cas d'accident, et de résister aux effets de pression et de température résultant d'une rupture accidentelle des circuits primaire ou secondaire. L'enceinte de confinement est constituée par un radier appelé radier général, par une jupe cylindrique qui s'élève sur le radier général et par un dôme qui ferme la jupe à sa partie supérieure.

On connaît (FR-A 2 226 729) un bâtiment réacteur de ce type. Il comporte un bâtiment en béton composé d'un radier général, d'une enceinte cylindrique, s'élevant sur le radier général, et fermée à sa partie supérieure par un dôme. Dans l'enceinte, on trouve un radier qui supporte les structures internes telles que le puits de cuve, la piscine de désactivation et les composants du circuit primaire. Ce radier est indépendant du radier général. Un redan central assure son centrage dans le bâtiment réacteur.

Dans ce bâtiment réacteur, le radier du bâtiment réacteur est en appui sur le radier général sur toute sa face inférieure. Par suite, les déformations du radier général sont transmises au radier des structures internes.

L'invention a précisément pour objet un bâtiment réacteur qui remédie à ces inconvénients en rendant les sollicitations dans les structures internes indépendantes des déformations du radier général. A cette fin, le bâtiment réacteur de l'invention comporte un espace situé entre le radier général et le radier des structures internes.

Plus précisément, le bâtiment réacteur de l'invention, constitué par une enceinte de confinement à l'intérieur de laquelle sont positionnées des structures internes par un moyen de centrage connu, ladite enceinte de confinement se composant d'une jupe cylindrique, fermée à sa partie supérieure par un dôme, et s'élevant sur un radier, dit radier général, lesdites structures internes se composant d'un radier, dit radier des structures internes, reposent rule radier général par rapaitre inférieure, d'un cylindre de béton, dit puits de cuve, situé sensiblement au centre du radier des structures internes et de casemates, se caractérise en ce que la partie inférieure du radier des structures internes repose sur le radier général par une couronne d'appui périphérique, un espace étant prévu entre le radier général et le radier des structures internes.

L'espace situé entre le radier général et le radier des structures internes permet d'absorber les déformations relatives qui tendent à rapprocher le radier général du radier des structures internes. On rend ainsi les sollicitations dans les structures internes indépendantes des déformations du radier général.

Le problème qui se pose consiste à couler le béton du radier des structures internes tout en ménageant ledit espace dans le radier des structures internes de telle que celui-ci ne repose sur le radier général que par la couronne d'appui périphérique. Ce problème est résolu par la présente invention.

Selon un premier mode de réalisation, ledit espace est obtenu par une couche compressible disposée sur toute la surface circulaire située à l'intérieur de la couronne d'appui périphérique.

Le radier des structures internes est bétonné en deux temps. On coule tout d'abord une couronne périphérique qui ne recouvre pas la surface située en regard du puits de cuve. Un jeu de cales est implanté provisoirement sous le puits de cuve, pour éviter en cours de réalisation l'épuisement de la capacité de déformation de la couche compressible. Ces cales sont déposées par vérinage dès que les structures internes ont acquis une inertie suffisante pour être autoporteuses sur la couronne d'appui périphérique. Les cales ayant été évacuées par le puits de cuve, un matelas compressible est mis en place sur la partie centrale du radier général située en regard du puits de cuve. La partie du radier de structures internes située au droit du puits de cuve peut alors être bétonnée. Des armatures en attente sont prévues à la base de la jupe du puits de cuve pour assurer la solidarisation des deux structures.

Selon un deuxième mode de réalisation, le bâtiment réacteur de l'invention comporte des prédalles disposées entre le radier général et le radier des structures internes, les prédalles reposant sur le radier général par au moins trois points d'appui et recouvrant l'ensemble de la surface circulaire située à l'intérieur de la couronne d'appui périphérique à l'exception de la partie du radier général située en regard du puits de cuve, une couche compressible étant située au-dessus des prédalles, une autre couche compressible étant située sur le radier général, une chape non armée au mortier ciment assurant la protection de la couche compressible lors de l'exécution du radier des structures internes, un système d'éventage mettant en communication l'espace libre avec l'atmosphère de l'enceinte de confinement.

Pour ce deuxième mode de réalisation, la présence d'une couche compressible au-dessus des prédalles est indispensable afin d'assurer l'indépendance des sollicitations dans les structures internes par rapport aux déformations du radier général. En effet, sans cette couche, les prédalles reposant sur le radier général par au moins trois points d'appui et recouvrant l'ensemble de la surface circulaire située à l'intérieur de la couronne d'appui périphérique transmettraient les déformations du radier général aux structures internes.

Conformément à un troisième mode de réalisation de l'invention, l'espace situé entre le radier général et le radier des structures internes peut être obtenu au moyen de grandes prédalles présentant une forme de secteur de couronne et capables de supporter leur propre masse augmentée de celle de tout ou partie du béton frais du radier des structures internes. On constitue ainsi un espace libre dans le radier des structures internes. Dans ce mode de réalisation comme dans le précédent, un deuxième objet de l'invention est de supprimer l'effet de pression en cas d'accident de référence sur le radier des structures internes. A cette fin, un système d'éventage met en communication l'espace libre avec l'atmosphère de l'enceinte de confinement.

Ainsi, selon ce troisième mode de réalisation, les prédalles s'appuient côté extérieur sur le radier général et côté intérieur sur des cales provisoires de manière à déterminer un espace entre le radier général et le radier des structures internes, un système d'éventage mettant en communication l'espace libre avec l'atmosphère de confinement.

Pour ce mode de réalisation, l'espace ménagé dans le radier des structures internes est constitué par l'espace libre situé entre les prédalles et le radier général. Ainsi, la couche compressible qui existe dans le cas des deux modes de réalisation précédents n'est pas indispensable.

D'autres caractéristiques et avantages de l'invention apparaîtront clairement après lecture de la description qui suit, donnée à titre illustratif et nullement limitatif, en référence aux dessins annexés, sur lesquels:

la f i g. 1 représente deux demi-vues en coupe de l'ensemble d'un bâtiment réacteur. La demi-vue de gauche représente un premier mode de réalisation comportant un radier des structures internes en une seule partie positionné par la partie centrale. La demi-vue de droite montre un autre mode de réalisation dans lequel le radier des structures internes comporte une dalle buton;

la f i g. 2 représente une vue en coupe partielle du premier mode de réalisation;

la f i g. 3 représente un deuxième mode de réalisation;

les f i g. 4 et 5 représentent un troisième mode de réalisation de l'invention.

On a représenté sur la f i g. 1 une vue en coupe d'un bâtiment réacteur comportant une disposition des structures internes conforme à l'invention. La cuve du réacteur 2 est disposée à l'intérieur à l'intérieur d'une enceinte de confinement désignée par la référence général 4. Cette enceinte se compose d'une jupe cylindrique 6, d'un radier 8, dit radier général, et d'un dôme (non représenté) qui ferme l'enceinte à sa partie supérieure. L'étanchéité de l'enceinte de confinement 4 est assurée par un revêtement métallique 10 en acier doux appelé encore peau. La partie inférieure de la jupe cylindrique 6 est raccordée au radier général 8. Ce raccordement peut prendre la forme d'un gousset tronconique 12 comme représenté sur les f i g. 1, 2, mais peut également être de forme cylindrique.

Les structures internes en béton, désignées par la référence 14, sont implantées dans l'enceinte de confinement 4 et servent de support principalement aux composants du circuit primaire. Ces structures se composent d'un radier 16, dit radier des structures internes, d'un cylindre de béton 18, dit puits de cuve, support de la cuve 2 du réacteur et situé sensiblement au centre du radier des structures internes 16, et de casemates 20 disposées de manière rayonnante par rapport au puits de cuve 18 dont elles sont solidaires. Les structures internes sont généralement désolidarisées de l'enceinte de confinement. Un joint d'étanchéité 5, par exemple en styrène, est derfacé entre cette enceinte et les structures internes.

Le radier des structures internes peut être positionné dans l'enceinte de confinement de plusieurs manières différentes.

Selon une première version, le positionnement est réalisé par un clavage de la partie centrale du radier des structures internes sur le radier général, ce clavage assurant le blocage relatif dans le sens horizontal desdites structures tout en permettant leur libre dilatation. Dans cette version représentée sur la partie gauche de la f i g. 1, le radier général 8 comporte un redan circulaire 46 en saillie au-dessus de ce radier et recouvert par la peau d'étanchéité 10. Le radier des structures internes 16 présente en regard un logement circulaire 47 coopérant avec le redan 46 par une couronne circulaire verticale 48. On réalise ainsi un blocage horizontal tout en permettant des déplacements relatifs verticaux des radiers l'un par rapport à l'autre. L'espace libre 33 ménagé entre le radier des structures internes 16 et le radier général 8 règne sur toute la surface de ce dernier, y compris au droit du redan, à l'exception de la couronne d'appui périphérique 23. Selon une deuxième version représentée sur la partie droite de la f i g. 1, le radier des structures internes 16 comporte une dalle buton 22 désolidarisée de ce dernier au moyen d'un joint horizontal 24 constitué par un produit de glissement. Ce joint règne en couronne à partir du puits de cuve 18 entre la dalle 22 et le radier des structures internes 16. L'épaisseur de la dalle buton 22 est dimensionnée au minimum compatible avec les efforts sismiques à transmettre afin de limiter en conséquence la poussée d'origine thermique de cette dalle sur le gousset 12.

Conformément à l'invention, les deux versions de bâtiments réacteurs représentées sur la f i g. 1 comportent chacune un espace 33 situé entre le radier général 8 et le radier des structures internes 16; cet espace rend les sollicitations dans les structures internes indépendantes des déformations du radier général. On décrit ci-après, en référence aux f i g. 2 à 5, différents modes de réalisation de l'espace 33 permettant d'obtenir cette indépendance.

On a représenté sur la f i g. 2 une vue en coupe partielle représentant le premier mode de réalisation.

On remarque sur cette figure le radier général 8, le revêtement en acier doux 10 qui assure l'étanchéité de l'enceinte de cinfinement 4, la couche de béton 11 de protection de la peau, ainsi que les canaux 13 enrobés dans la couche de protection 11 afin de permettre la vérification des soudures de la peau 10. On remarque également le raccordement 12, de la partie inférieure de la jupe cylindrique 6 de l'enceinte de confinement au radier général 8. La dalle 22 comporte une partie centrale 22a, située en regard du puits de cuve, et une partie périphérique 22b, bloquée contre le gousset 12 de l'enceinte de confinement. La dalle buton 22 ne repose sur le radier général que par une couronne d'appui périphérique 23 de largeur relativement réduite, ce qui détermine au centre de la couronne 23 une surface circulaire 25 du radier général 8 qui n'est pas en contact avec le radier des structures internes 16.

Selon le mode de réalisation de l'invention représenté sur la f i g. 2, l'espace 33 est constitué par une couche compressible 32 disposée sur toute la surface 25. Une feuille de vinyle 34 disposée au-dessus de la couche compressible 32 assure sa protection lors de l'exécution de la dalle 22.

L'invention concerne également un procédé de réalisation des structures internes représentées sur la f i g. 2.

Selon ce procédé, on réalise le radier général 8, le revêtement d'étanchéité 10 et la couche de protection 11 de ce revêtement. On dispose la couche compressible 32 et sa feuille de protection 34 sur la surface annulaire 25 située entre la couronne d'appui 23 et la partie du radier au droit du puits de cuve 18. On bétonne la couronne d'appui périphérique 23 et ensuite sur la feuille de protection 34 on peut, soit disposer un coffrage perdu, soit bétonner une dalle qui sera autoporteuse du béton frais du radier des structures internes.

Pour limiter l'inertie de ce coffrage ou de la dalle on dispose des cales provisoires 36 tout autour de la surface située en regard en regard de la partie 22a de la dalle 22. On poursuit le bétonnage des structures internes à l'exception de la partie centrale 22a qui sera coulée ultérieurement.

Lorsque les structures internes ont acquis une inertie suffisante pour être autoporteuses sur leur couronne d'appui périphérique 23, on peut déposer les cales 36 au moyen de vérins (non représentés). Les cales et les vérins sont évacués par l'orifice circulaire qui existe à cette étape de la réalisation des structures internes à la place de la partie centrale 22a. On met en place une deuxième couche compressible 38 sur le radier général 8 au regard de la partie 22a. Puis une chape non armée au mortier de ciment 40 est réalisée sur le matelas compressible 38. On peut alors bétonner la partie 22a de la dalle. Des armatures en attente sont prévues à la base de la jupe du puits de cuve pour assurer la solidarisation des deux structures.

On a représenté sur la f i g. 3 un deuxième mode de réalisation de l'invention. Ce mode de réalisation comporte des prédalles 30 disposées sur toute la surface 25, à l'exception du cercle situé en regard du puits de cuve 18. Ces prédalles 30 reposent sur le radier général par quatre points d'appui 31. On réalise ainsi, entre le radier général 8 et les prédalles 30, un espace libre 27 qui est mis en communication avec l'atmosphère de l'enceinte de confinement par un système d'éventage 29. Cette disposition permet d'équilibrer, en cas d'accident, la pression de part et d'autre du radier des structures internes 16. Ainsi, en cas d'accident de référence, la pression effective sur le radier des structures internes est nulle et l'effet de pression est reporté sur le radier général 8.

Par ailleurs, afin d'assurer l'indépendance des sollicitations dans les structures internes par rapport aux déformations du radier général, on a disposé sur toute la surface, des prédalles 30 une couche compressible 32 réalisée par exemple en polystyrène avec une protection de vinyle. La couche compressible 32 a pour but d'absorber les déformations relatives qui tendent à rapprocher le radier général 8 du radier des structures internes 16 et réalise ainsi la fonction de l'espace 33 décrit dans le premier mode de réalisation. Une feuille de vinyle 34 disposée au-dessus de la couche compressible 32 assure sa protection lors de l'exécution de la dalle buton 22.

L'invention concerne également un procédé de réalisation des structures internes représentées sur la f i g. 3. Selon ce procédé, on réalise le radier général 8, le revêtememt d'étanchéité en acier doux 10, et la couche 11 de protection de ce revêtement. On dispose ensuite les prédalles 30 sur la surface annulaire délimitée par la couronne d'appui périphérique 23 de la dalle sur le radier général à l'extérieur, et à l'intérieur, par la surface du radier général située en regard de la partie 22a de la dalle. On dispose la couche compressible 32 sur les prédalles 30, puis une feuille de protection en vinyle 34 sur la couche compressible 32. On bétonne la couronne d'appui périphérique 23. On dispose des cales 36 tout autour de la surface située en regard de la partie 22a de la dalle, ces cales 36 implantées provisoirement ayant pour but d'éviter l'épuisement de la capacité de déformation de la couche compressible 32 au cours de la réalisation des structures internes. Sur la feuille de protection 34 on peut, soit disposer un coffrage perdu, soit bétonner une dalle qui sera autoporteuse du béton frais de la dalle 22. On coule alors le béton de la dalle 22 à l'exception de la partie centrale 22a qui sera coulée ultérieurement. Lorsque les structures internes ont acquis une inertie suffisante pour être autoporteuses sur la couronne d'appui périphérique 23, on peut déposer les cales 36 au moyen de vérins (non représentés). Les cales et les vérins sont évacués par l'orifice circulaire qui existe à cette étape de réalisation des structures internes, à la place de la partie centrale 22a. On met en place une deuxième couche compressible 38 sur le radier général 8 en regard de la partie 22a. Puis une chape non armée au mortier de ciment 40 est réalisée sur le matelas compressible 38. On peut alors bétonner la partie 22a de la dalle. Des armatures en attente sont prévues à la base de la jupe du puits de cuve pour assurer la solidarisation des deux structures.

On a représenté sur les f i g. 4 et 5 un troisième mode de réalisation de l'invention. Selon ce mode de réalisation, l'espace 33 pour le découplage du radier général et des structures internes est obtenu au moyen de grandes prédalles 42 en forme de secteurs circulaires. Ces prédalles possèdent deux points d'appui 44 situés à leur périphérie. Elles ne possèdent aucun point d'appui à leur partie centrale 42a. Des cales 36, plus particulièrement visibles sur la f i g. 4, tiennent lieu de points d'appui pendant la réalisation des structures internes, et ceci jusqu'à ce que celles-ci aient acquis une rigidité suffisante pour être autoporteuses de leur propre masse. Les prédalles 42 sont disposées côte à côte comme on peut le voir sur la f i g. 5 de manière à recouvrir l'ensemble de la surface annulaire située entre la couronne d'appui périphérique 23 de la dalle 22 et la surface du radier général 8 située en regard du puits de cuve. Elles déterminent l'espace libre 33 qui, comme l'espace 27 du deuxième mode de réalisation, est mis en communication avec l'atmosphère de l'enceinte de confinement 4 par un système d'éventage 29. Les prédalles 42 sont suffisamment rigides pour supporteur leur propre masse augmentée de celle du béton frais de la dalle 22. Dans ce mode de réalisation, la couche compressible 32 nécessaire dans le cas du deuxième mode de réalisation n'existe pas, étant donné que les prédalles 42, contrairement aux prédalles 30, n'ont pas de points d'appui intermédiaires et ne transmettent donc pas aux structures internes les déformations du radier général 8. En revanche, il est à remarquer que la couche compressible 38 située en regard du puits de cuve existe également dans ce troisième mode de réalisation.

L'invention concerne également un procédé de réalisation des structures internes qui viennent d'être décrites en référence aux f i g. 4 et 5. Selon ce procédé, on dispose les prédalles 42 côte à côte, comme représenté sur la f i g. 5, sur la surface du radier général située entre la couronne d'appui périphérique 23 de la dalle 22 et la surface située en regard du puits de cuve, les cales d'appui 36 étant disposées sous l'extrémité 42a des prédalles 42. On commence alors de bétonner les structures internes à l'exception de la zone 22a située en regard du puits de cuve. Lorsque les structures internes ont acquis une rigidité suffisante pour être autoporteuses sur leur couronne d'appui périphérique 23, les cales 36 sont évacuées au moyen de vérins (non représentés) par l'ouverture centrale qui subsiste encore à ce stade de l'exécution de la dalle.

L'espace 27 ou 33 peut être asséché après un accident. Il est raccordé au système de balayage de l'enceinte de confinement au moyen d'un tube noyé dans le radier des structures internes, l'air étant extrait par les conduits d'éventage 29.

Dans le cas où la couche compressible est réalisée en polystyrène, il est possible qu'elle se dégrade dans le temps, soit sous forme d'une autodégradation lente avec émission de gaz, soit sous l'action des agents chimiques contenus dans l'eau de recirculation. Cerpendant, compte tenu de la composition du polystyrène, cette dégradation ne présente aucun inconvénient particulier. La disparition de la couche compressible facilite même le bon fonctionnement des structures internes, en particulier l'indépendance des déformations des structures internes et du radier général.

Le fonctionnement des structures internes qui viennent d'être décrites est le suivant.

En cas d'accident, le système d'éventage met l'espace libre 27 ou 33 aménagé sous les prédalles à la pression de l'enceinte de confinement 4. Cette pression est transmise à la surface inférieure du radier des structures internes par compression du feuilleté constitué par les prédalles, la couche compressible et sa chape non armée de protection lorsqu'elles existent (deuxième mode de réalisation), et éventuellement la dalle buton 22, le joint horizontal 24 constitué par un produit de glissement et sa chape de protection 26 au mortier ciment non armé.

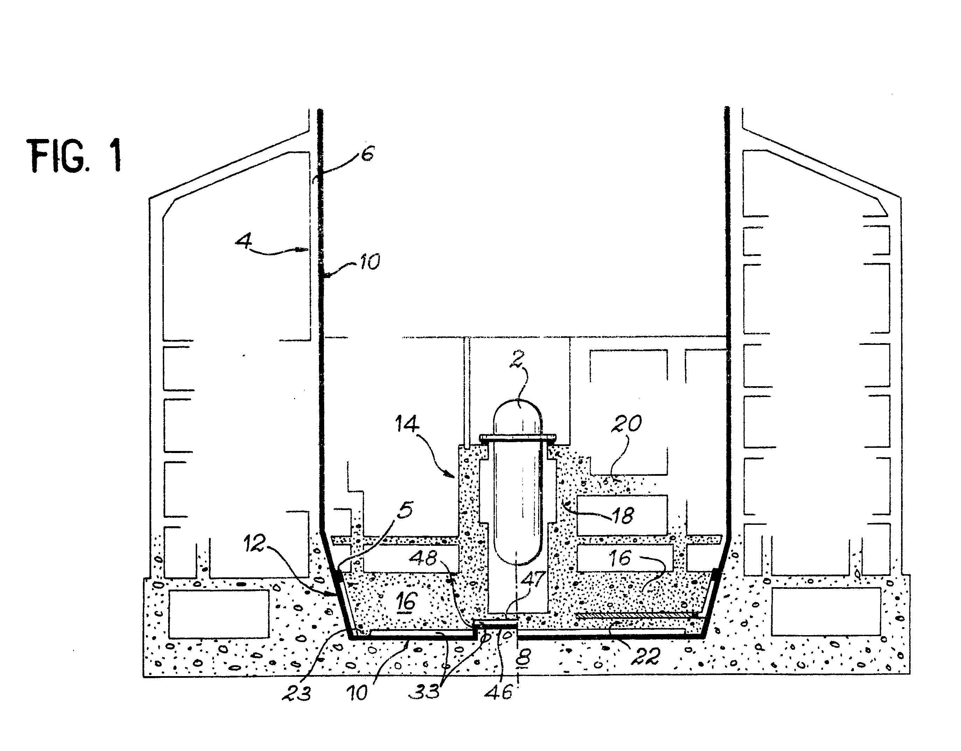

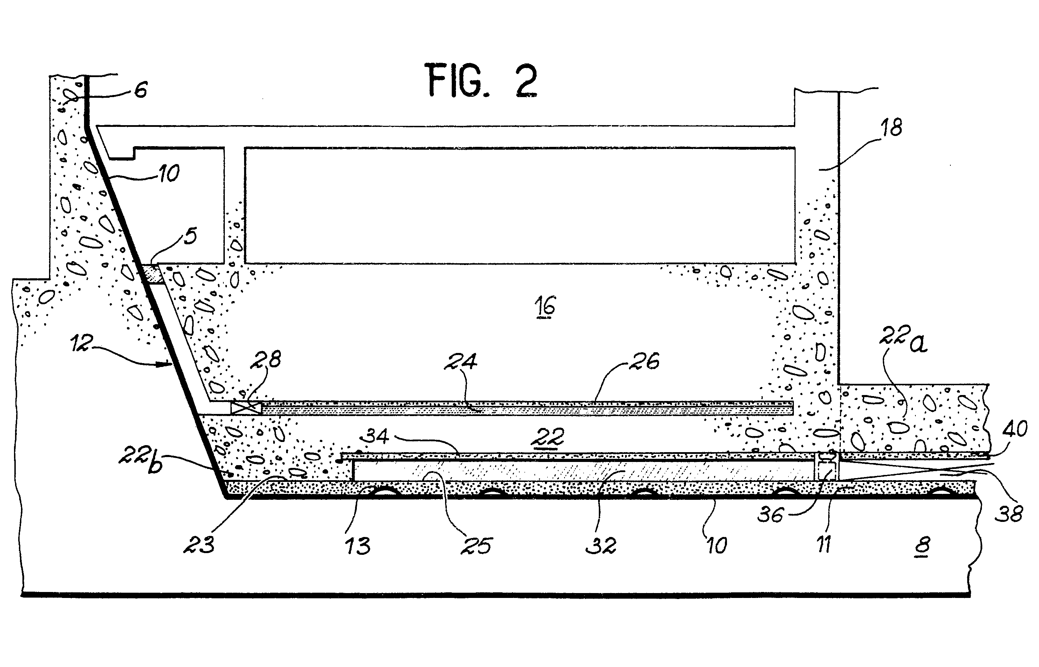

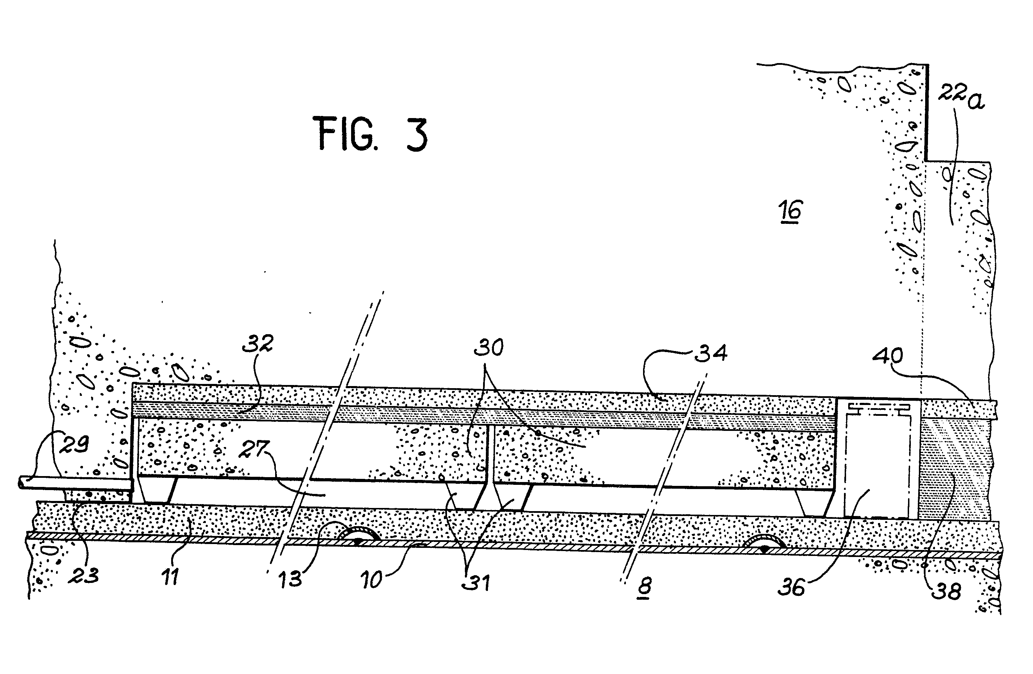

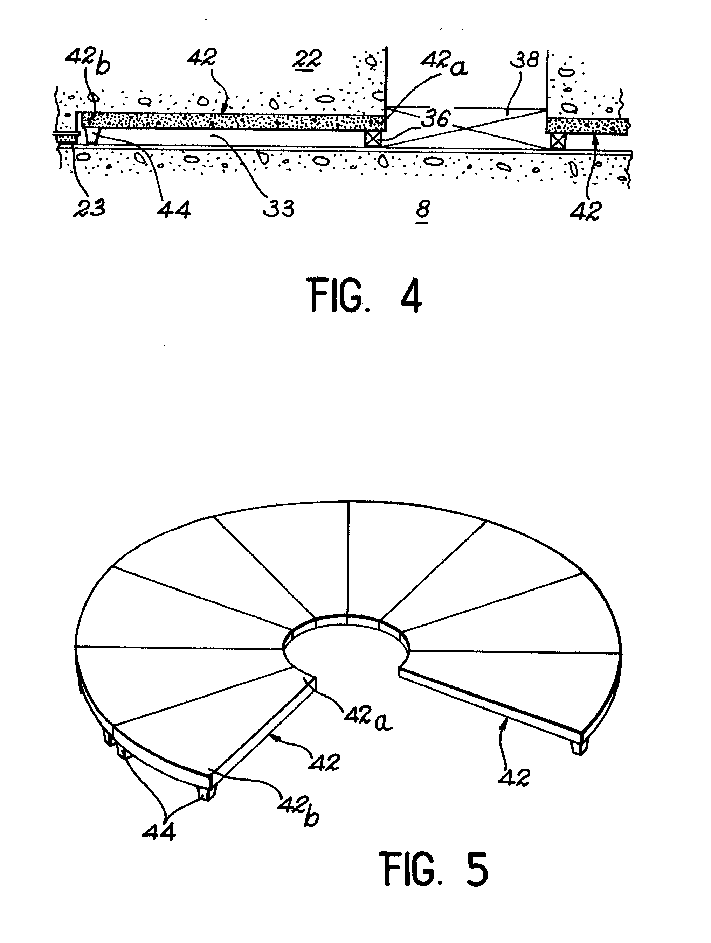

**Revendications**

1. Bâtiment réacteur, constitué par une enceinte de confinement (4) à l'intérieur de laquelle sont positionnées des structures internes (14) par un moyen de centrage connu, l'enceinte de confinement (4) se composant d'une jupe cylindrique (6), fermée à sa partie supérieure par un dôme, et s'élevant sur un radier (8), dit radier général, les structures internes (14) se composant d'un radier (16) dit radier des structures internes, reforant un le radier général par sa partie inférieure, d'un cylindre de béton (18) dit puits de cuve, situé sensiblement au centre du radier des structures internes et de casemates, caractérisé en ce que la partie inférieure du radier des structures internes (16) repose sur le radier général (8) par une couronne d'appui périphérique (23), un espace (33) étant prévu entre le radier général (8) et le radier des structures internes (16).

2. Bâtiment réacteur selon la revendication 1, caractérisé en ce qu'il comporte une couche compressible, formée des parties (32 et 38) entre le radier général (8) et le radier des structures internes (16) sur toute la surface circulaire située à l'intérieur de la couronne d'appui périphérique (23).

3. Bâtiment réacteur selon la revendication 1, caractérisé en ce qu'il comporte des prédalles (30) disposées entre le radier général (8) et le radier des structures internes (16), les prédalles (30) reposant sur le radier général (8) par au moins trois points d'appui (31) et recouvrant l'ensemble de la surface annulaire située à l'intérieur de la couronne d'appui périphérique (23) à l'exception de la partie du radier général (8) située en regard du puits de cuve (18), une couche compressible (32) étant située au-dessus des prédalles (30), une autre couche comfremble (38) étant située un le radier général (8) une chape non armée (40) au mortier de ciment assurant la protection de la couche compressible (32) lors de l'exécution du radier (16) des structures internes, un système d'éventage (29) mettant en communication l'espace libre avec l'atmosphère de l'enceinte de confinement (4).

4. Bâtiment réacteur selon la revendication 1, caractérisé en ce qu'il comporte des prédalles (42) présentant une forme de secteur de couronne et capables de supporter leur propre masse augmentée de tout ou partie de celle du béton frais du radier des structures internes (16), les prédalles (42) reposant sur le radier général (8) par des appuis (44) prévus à leur seule partie périphérique (42b) de manière à déterminer un espace (33) entre le radier général (8) et le radier des structures internes (16) un système d'éventage (29) mettant en communication l'espace libre (33) avec l'atmosphère de l'enceinte de confinement (4).

5. Bâtiment réacteur selon l'une quelconque des revendication 1 à 3, caractérisé en ce que la couche compressible est en polystyrène.

6. Procédé de réalisation des structures internes d'un bâtiment réacteur selon l'une quelconque des revendications 1 et 2, caractérisé en ce que:

— on dispose sur le radier général (8) une couche compressible (32) et sa feuille de protection (34) sur la surface annulaire (25) comprise entre la couronne d'appui (23) et la partie du radier au droit du puits de cuve (18),
— on bétonne la couronne d'apui périphérique (23),
— on dispose des cales provisoires (36) tout autour de la surface située en regard de la partie (22a) du radier (16),
— on place sur la feuille de protection (34) un dispositif annulaire porteur de la première levée de béton entre la couronne d'appui périphérique (23) et les cales provisoires (36),
— on coule le béton de la dalle (22) à l'exception de la zone centrale (22a),

— on dépose les cales (36) par vérinage dès que les structures internes (14) ont acquis une inertie suffisante pour être autoporteuses sur leur couronne d'appui périphérique (23),
— on évacue les cales (36) et les vérins,
— on met en place une couche compressible (38) sur la partie du radier général (8) située en regard du puits de cuve (18),
— on coule la chape (40) non armée au mortier de ciment sur la couche compressible (38),
— on coule la partie (22a) de la dalle située en regard du puits de cuve (18).

7. Procédé de réalisation des structures internes d'un bâtiment réacteur selon la revendication 3, caractérisé en ce que:

— on dispose les prédalles (30) sur le radier général (8) dans la couronne délimitée, à l'extérieur, par la zone d'appui périphérique (23) de la dalle (22) et à l'intérieur, par la surface circulaire du radier (8) située en regard du puits de cuve (18), des cales (36) étant placées en regard de la partie (22a) de la dalle,
— on dispose la couche compressible (32) avec sa feuille de protection (34),
— on place sur la feuille de protection (34) un dispositif annulaire porteur de la première levée de béton entre la couronne d'appui périphérique (23) et les cales provisoires (36),
— on coule le béton de la dalle (22), à l'exception de la zone centrale (22a),
— on dépose les cales (36) par vérinage dès que les structures internes (14) ont acquis une inertie suffisante pour être autoporteuses sur leur couronne d'appui périphérique (23),
— on évacue les cales (36) et les vérins,
— on met en place une couche compressible (38) sur la partie du radier général (8) située en regard du puits de cuve (18),
— on coule une chape (40) non armée au mortier de ciment sur la couche compressible (38),
— on coule la partie (22a) de la dalle située en regard du puits de cuve (18).

8. Procédé de réalisation des tructures internes d'un bâtiment réacteur selon la revendication 4, caractérisé en ce que:

— on dispose les prédalles (42) avec leurs cales (36) sur le radier général (8),
— on coule le béton de la dalle (22), à l'exception de la zone centrale (22a),
— on dépose les cales (36) par vérinage dès que les structures internes (14) ont acquis une inertie suffisante pour être autoporteuses sur leur couronne d'appui périphérique (23),
— on évacue les cales (36) et les vérins,
— on met en place une couche compressible (38) sur la partie du radier général (8) située en regard du puits de cuve (18),
on coule une chape (40) non armée au mortier de ciment sur la couche compressible (38),
on coule la partie (22a) de la dalle située en regard du puits de cuve (18).

## Patentansprüche

1. Reaktorgebäude welches von einer Sicherheitshülle (4) gebildet ist, in deren Innerem innere Strukturen (14) mittels bekannter Zentrierungsmittel angeordnet sind, wobei die Sicherheitshülle (4) von einer zylinderförmigen Wand (6) gebildet ist, die an ihrem oberen Ende mit einer Kuppel geschlossen ist und sich von einem Fundament (8) erstreckt, welches als Plattenfundament bezeichnet wird, wobei die inneren Strukturen (14) von einem Fundament (16), welches als das Fundament der inneren Strukturen bezeichnet wird und mit seinem unteren Teil auf dem Plattenfundament ruht und einem Zylinder aus Beton (18) gebildet ist, welcher als Reaktorbehälterschacht bezeichnet wird und sich im wesentlichen in der Mitte des Fundamentes der inneren Strukturen und der abgeschirmten Räume befindet, dadurch gekennzeichnet, daß der untere Teil des Fundamentes der inneren Strukturen (16) mittels eines Umfangsstützkranzes (23) auf dem Plattenfundament (8) ruht, wobei ein Raum (33) zwischen dem Plattenfundament (8) und dem Fundament der inneren Strukturen (16) vorgesehen ist.

2. Reaktorgebäude nach Anspruch 1, dadurch gekennzeichnet, daß es eine zusammendrückbare, aus den Teilen (32 und 38) gebildete Schicht zwischen dem Plattenfundament (8) und dem Fundament der inneren Strukturen (16) über die gesamte Kreisförmige Oberfläche aufweist, die sich im Inneren des Umfangsstützkranzes (23) befindet

3. Reaktorgebäude nach Anspruch 1, dadurch gekennzeichnet, daß es zwischen dem Plattenfundament (8) und dem Fundament (16) der inneren Strukturen angeordnete, vorgefertigte Platten (30) umfaßt, die mit mindestens drei Stützpunkten (31) auf dem Plattenfundament (8) ruhen und die Gesamtheit der sich im Inneren des Umfangsstützkranzes (23) befindenden Ringfläche mit Ausnahme des Teils des Plattenfundamentes (8) überdecken, welcher dem Reaktorbehälterschacht (8) gegenüberliegt, daß sich eine zusammendrückbare Schicht auf den vorgefertigten Platten (30) befindet, daß sich eine andere zusammendrückbare Schicht (38) auf dem Plattenfundament (8) befindet, daß eine nicht armierte Decke (40) aus Mörtelzement den Schutz der zusammendrückbaren Schicht (32) bei der Herstellung des Fundamentes (16) der inneren Strukturen sicherstellt, und daß ein Lüftungssystem (29) den freien Raum mit der Atmosphäre in dem Sicherheitsbehälter (4) verbindet.

4. Reaktorgebäude nach Anspruch 1, dadurch gekennzeichnet, daß es vorgefertigte Platten (42) aufweist, die die Form eines Kranzausschnittes aufweisen und ihre eigene Masse tragen können, welche um die gesamte oder einen Teil der Masse des frischen Betons des Fundamentes (16) der inneren Strukturen erhöht ist, daß die vorgefertigten Platten (42) auf dem Plattenfundament (8) mittels Stützen (44) ruhen, die nur an ihrem Umfangsabschnitt (42b) derart vorgesehen sind, daß diese einen Raum (33) zwischen dem Plattenfundament (8) und dem Fundament (16) der inneren Strukturen festlegen, und daß ein Lüftungssystem (29) eine Verbindung zwischen dem freien Raum (33) mit der Atmosphäre des Sicherheitsbehälters (4) herstellt.

5. Reaktorgebäude nach irgendeinem der Ansprüche 1 bis 3, dadurch gekennzeichnet, daß die zusammendrückbare Schicht aus Polystyren besteht.

6. Verfahren zum Herstellen der inneren Strukturen eines Reaktorgebäudes nach Anspruch 1 oder 2, dadurch gekennzeichnet, daß

— auf dem Plattenfundament (8) eine zusammendrückbare Schicht (32) und ihre Schutzlage (34) auf der ringförmigen Oberfläche (25) angeordnet werden, die zwischen dem Stützkranz (23) und dem Teil des Fundamentes an der Stelle des Reaktorbehälterschachtes (18) umfaßt wird,

— der Umfangsstützkranz (23) betoniert wird.

— vorläufige Klötze (36) um die gesamte, dem Teil (22a) des Fundamentes (16) gegenüberliegende Oberfläche angeordnet werden,

— auf der Schutzlage (34) eine ringförmige Vorrichtung angeordnet wird, die die erste Betonschüttung zwischen dem Umfangsstützkranz (23) und den vorübergehenden Klötzen (36) trägt.

— der Beton für die Platte (22) mit Ausnahme des zentralen Bereiches (22a) gegossen wird.

— die Klötze (36) durch Winden entfernt werden, sobald die inneren Strukturen (14) eine ausreichende Stabilität erreicht haben, so daß sie auf ihrem Umfangsstützkranz (23) selbsttragend sind.

— die Klötze (36) und die Winden entfernt werden.

— eine zusammendrückbare Schicht (38) auf dem dem Reaktorbehälterschacht (18) gegenüberliegenden Teil des Plattenfundamentes (8) angeordnet wird.

— eine Schicht (40) aus nicht armiertem Zementmörtel auf die zusammendrückbare Schicht (38) gegossen wird,

— der dem Reaktorbehälterschacht (18) gegenüberliegende Teil (22a) der Platte gegossen wird.

7. Verfahren zum Herstellen der inneren Strukturen eines Reaktorgebäudes nach Anspruch 3, dadurch gekennzeichnet, daß

— die vorgefertigten Platten (30) auf dem Plattenfundament (8) angeordnet werden, welches außen in dem Bereich der Umfangsstützen (23) der Platte (22) und im Inneren von der dem Reaktorbehälterschacht (18) gegenüberliegenden, kreisförmigen Oberfläche des Plattenfundamentes (8) begrenzt ist, wobei Klötze (36) dem Teil (22a) der Platte gegenüberliegend angeordnet werden,

— die zusammendrückbare Schicht (32) mit ihrer Schutzlage (34) angeordnet wird,

— auf der Schutzlage (34) eine ringförmige Vorrichtung angeordnet wird, die die erste Betonschüttung zwischen dem Umfangsstützkranz (23) und den vorübergehenden Klötzen (36) trägt.

— der Beton für die Platte (22) mit Ausnahme des zentralen Bereiches (22a) gegossen wird,

— die Klötze (36) durch Winden entfernt werden sobald die inneren Strukturen (14) eine ausreichende Stabilität erreicht haben, um auf ihrem Umfangsstützkranz (23) selbsttragend zu sein,

— die Klötze (36) und die Winden herausgenommen werden,

— auf dem dem Reaktorbehälterschacht (18) gegenüberliegenden Teil des Plattenfundamentes (8) eine zusammendrückbare Schicht (39) angeordnet wird.

— eine Schicht (40) aus nicht armiertem Mörtelzement auf die zusammendrückbare Schicht (38) gegossen wird,

— der dem Reaktorbehälterschacht (18) gegenüberliegende Teil (22a) gegossen wird.


8. Verfahren zum Herstellen der inneren Strukturen eines Reaktorgebäudes nach Anspruch 4, dadurch gekennzeichnet, daß

— vorgefertigten Platten (42) mit ihren Klötzen (36) auf dem Plattenfundament (22a) angeordnet werden.

— der Beton für die Platte (22) mit Ausnahme des mittleren Bereiches (22a) gegossen wird,

— die Klötze durch Winden entfernt werden, sobald die inneren Strukturen (14) eine ausreichende Stabilität erreicht haben, um auf ihrem Umfangsstützkranz (23) selbsttragend zu sein,

— die Klötze (36) und die Winden herausgenommen werden,

— eine zusammendrückbare Schicht (38) auf dem dem Reaktorbehälterschacht (18) gegenüberliegenden Teil des Plattenfundamentes (8) angeordnet wird,

— eine Schicht (40) aus nicht armiertem Zementmörtel auf die zusammendrückbare Schicht (38) gegossen wird,

— der dem Reaktorbehälterschacht (18) gegenüberliegende Teil (22a) der Platte gegossen wird.

**Claims**

1. Reactor building comprising a confining vessel (4) inside which internal structures (14) are positioned by a known centering means, the confining vessel (4) being composed of a cylindrical skirt (6) closed at the top by a dome and rising on a raft (8), referred to as the foundation raft, the internal structures (14) being composed of a raft (16), referred to as the internal structure raft and having its bottom resting on the foundation raft, a concrete cylinder (18) referred to as the core tank, located substantially in the centre of the internal structure raft and casemates, characterised in that the bottom part of the internal structure raft (16) rests on the foundation raft (8) through a peripheral support ring (23), a space (33) being provided between the foundation raft (8) and the internal structure raft (16).

2. Reactor building according to Claim 1, characterised in that it comprises a compressible layer formed by parts (32 and 38) between the foundation raft (8) and the internal structure raft (16) over the entire circular surface situated inside the peripheral support ring (23).

3. Reactor building according to Claim 1, characterised in that it comprises intermediate slabs (30) disposed between the foundation raft (8) and the internal structure raft (16), the intermediate slabs (30) resting on the foundation raft (8) through at least three support points (31) and covering the whole of the annular surface situated within the peripheral support ring (23) with the exception of the part of the foundation raft which is situated opposite the core tank (18), a compressible layer (32) being situated above the intermediate slabs (30), another compressible layer (38) being situated on the foundation raft (8), a cement mortar nonreinforced covering (40) protecting the compressible layer (32) while the internal structure raft (16) is being made, a ventilation system (29) providing communication between the free space and the atmosphere in the confining vessel (4).

4. Reactor building according to Claim 1, characterised in that it comprises intermediate slabs (42) which take the form of a segment of a ring and being capable of supporting their own mass plus all or part of that of the fresh concrete of the internal structure raft (16), the intermediate slabs (42) resting on the foundation raft 8 through supports (44) provided only around the peripheral portion (42b) thereof so as to define a space (33) between the foundation raft (8) and the internal structure raft (16), a ventilating system (29) providing for communication between the free space (22) and the atmosphere in the confining vessel (4).

5. Reactor building according to any one of Claims 1 to 3, characterised in that the compressible layer is of polystyrene.

6. Method of producing internal structures of a reactor building according to any one of Claim 1 and 2, characterised in that:

there is disposed on the foundation raft (8) a compressible layer (32) and its protective sheet (34) on the annular surface (25) comprised between the support ring (23) and the part of the raft which is at a right-angle to the core tank (18),

— the peripheral support ring (23) is concreted,
— provisional wedges (36) are positioned all around the surface situated opposite the part (22a) of the raft (16),
— on the protective sheet (34) is placed an annular device to carry the first run of concrete between the peripheral support ring (23) and the provisional wedges (36),
— the concrete is cast for the slab (22) with the exception of the central area (22a),
— the wedges (36) are positioned by the use of jacks as soon as the internal structures (14) have acquired sufficient inertia to be self-supporting on their peripheral support ring (23),
— the wedges (36) and the jacks are removed,
— a compressible layer (38) is placed in position on the part of the foundation raft (8) which is situated opposite the core tank (18),
— the cement mortar non-reinforced covering (40) is poured on the compressible layer (38),
— the part (22a) of the slab which is opposite the core tank (18) is poured.

7. A method of producing internal structures of a reactor building according to Claim 3, characterised in that:

— intermediate slabs (30) are positioned on the foundation raft (8) in the ring which, at the outside, is bounded by the peripheral support zone (23) of the slab (22) and on the inside by the circular surface of the raft (8) situated opposite the core tank (18), wedges (36) being placed opposite the part (22a) of the slab,
— the compressible layer (32) with its protective sheet (34) is placed in position,
— on the protective sheet (34) is placed an annular device to carry the first run of concrete between the peripheral support ring (23) and the provisional wedges (36),
— the concrete is poured for the slab (22), with the exception of the central zone (22a),
— wedges (36) are positioned by the use of jacks as soon as the internal structures (14) have acquired sufficient inertia to be self-supporting on the peripheral support ring (23),
— the wedges (36) and the jacks are removed,
— a compressible layer (38) is positioned on the part of the foundation raft (8) which is situated opposite the core tank (18),
— a cement mortar non-reinforced covering (40) is cast on the compressible layer (38),
— that part (22a) of the slab which is situated opposite the core tank (18) is poured.

8. A method of producing internal structures of a reactor building according to Claim 4, characterised in that:

— intermediate slabs (42) with their wedges (46) are positioned on the foundation raft (8),
— the concrete is poured for the slab (22), with the exception of the central zone (22a),
— wedges (36) are placed in position by the use of jacks as soon as the internal structures (14) have acquired sufficient inertia to be self-supporting on their peripheral support ring (23),
— the wedges (36) and the jacks are removed,
— a compressible layer (38) is placed in position on the part of the foundation raft (8) which is situated opposite the core tank (18),
— a cement mortar non-reinforced covering (40) is cast on the compressible layer (38),
— that part (22a) of the slab which is situated opposite the core tank (18) is poured.

**FIG. 1**

# FIG. 2

# FIG. 3

FIG. 4

FIG. 5